# EUROPEAN PATENT APPLICATION

(11) **EP 4 796 499 A1**
(43) Date of publication of application: **26.08.2026**
(21) Application number: 24879821.7
(22) Date of filing: 18.10.2024
(51) Int. Cl.: C01F 11/00, C04B 35/01, C25B 13/07, H01B 1/06, H01B 1/08, H01B 13/00, H01M 8/12, H01M 8/124, H01M 8/1246, H01M 10/0562

(54) **NEW COMPOUND EXHIBITING HYDRIDE IONIC CONDUCTION PERFORMANCE, METHOD FOR PRODUCING SAME, AND USE THEREOF**

(30) Priority: 19.10.2023 JP 2023180481; 25.01.2024 JP 2024009669
(71) Applicant: RIKEN, Wako-shi, Saitama 351-0198 (JP)
(72) Inventor: KOBAYASHI, Genki, Wako-shi, Saitama 351-0198 (JP); TAKEIRI, Fumitaka, Wako-shi, Saitama 351-0198 (JP); YAGUCHI, Hiroshi, Wako-shi, Saitama 351-0198 (JP); OKAMOTO, Kei, Wako-shi, Saitama 351-0198 (JP)
(74) Representative: Angerhausen, Christoph
(86) International application number: PCT/JP2024/037188
(87) International publication number: WO 2025/084401

(57) **Abstract**

Provided are a novel compound exhibiting high hydride-ion conductivity, a method for producing the same, and applications such as batteries utilizing the same.

The compound is represented by general formula (I) defined as:

Ba_{1.75-x}SrₓLiHₐO_{b} (I)

wherein x satisfies 0 < x ≤ 1.65, b satisfies 0 < b ≤ 1.5, and a is a number that satisfies charge compensation with respect to b.

## Description

### Technical Field

The present invention relates to a compound exhibiting unique physical properties such as hydride-ion conductivity, a method for producing the same, and applications such as batteries utilizing the same.

### Background Art

Energy storage devices and power generation devices play important roles in building a sustainable society. Ionic conductors used in electrodes and solid electrolytes of these electrochemical devices are key materials that determine their operating principles and performance. Protons and oxide ions are used as mobile ions in energy conversion devices such as fuel cells and electrolysis devices.

In recent years, ionic conductors using hydride (H⁻) as a charge carrier have been reported. Hydride ions are monovalent, have an ionic radius of about 1.2 angstroms which is of moderate size, and have high polarizability, and therefore have characteristics that make them more suitable for fast ionic conduction as mobile ions than protons and oxide ions. Furthermore, because the redox potential of H₂ + 2e⁻ → 2H⁻ is as high as -2.25 V (vs. SHE), hydride ions have the potential to give rise to novel high-potential energy storage devices or highly reactive energy/material conversion devices.

Conventionally, materials containing a rare-earth element, an alkali metal element, and an alkaline-earth metal element have been proposed as materials exhibiting hydride-ion conductivity (Patent documents 1 to 3). A new hydride conductor, Ba_{1.75}LiH_{2.7}O_{0.9}, has been discovered, and it has been found to exhibit an extremely high conductivity exceeding 10⁻² S·cm⁻¹ through a structural phase transition occurring at around 300°C (Non patent document 1).

### Prior Art Documents

### Patent documents

Patent document 1: JP-A-2011-204632
Patent document 2: JP-A-2017-098067
Patent document 3: JP-A-2023-128076

### Non patent documents

Non patent document 1: F. Takeiri et al., Nature Materials 2022, 21, 325-330

### Summary of Invention

### Technical Problem

However, a further decrease in the phase transition temperature at which the conductivity increases sharply can expand the range in which the material can be applied as a solid electrolyte. In addition, since Ba_{1.75}LiH_{2.7}O_{0.9} becomes unstable with respect to metal electrodes such as Pt and Pd at 300°C or higher, this can be a factor limiting the temperature range in which it can be applied as a solid electrolyte. Although a dense sintered body is indispensable for use as a solid electrolyte, no studies aimed at that have ever been conducted to date.

It is an object of the present invention to provide a compound exhibiting high hydride-ion conductivity, a method for producing the same, and applications such as batteries utilizing the same. In particular, it is an object of the present invention to provide a compound exhibiting favorable hydride-ion conductivity over an intermediate-temperature range (for example, 200°C to 400°C, 275°C to 400°C, or 300°C to 400°C), a method for producing the same, and applications such as batteries utilizing the same.

### Solution to Problem

In view of the above objects, the present disclosure provides the following inventions.
[1] A compound is represented by general formula (I) defined as:

   Ba_{1.75-x}SrₓLiHₐO_{b} (I)

   (where x satisfies 0 < x ≤ 1.65, b satisfies 0 < b ≤ 1.5, and a is a number that satisfies charge compensation with respect to b).
[2] A compound is represented by general formula (Ia) defined as:

   Ba_{1.75-x}SrₓLiH_{2.7-2y}O_{0.9+y} (Ia)

   (where x satisfies 0 < x ≤ 1.65 and -0.9 < y ≤ 0.6).
[3] The compound described in [1] or [2] exhibits, at a temperature of 25°C, an X-ray powder diffraction pattern corresponding to a layered perovskite-type structure belonging to an orthorhombic crystal system and having space group Pnm2₁.
[4] In the compound described in any one of [1] to [3], 0 < x ≤ 1.0.
[5] In the compound described in any one of [1] to [4], 0.01 ≤ x ≤ 0.15.
[6] In the compound described in any one of [1] to [5], -0.89 ≤ y ≤ 0.6.
[7] The compound described in any one of [1] to [6] is represented by general formula (II) defined as:

   Ba_{1.75-x}SrₓLiH_{2.7}O_{0.9} (II)

   wherein x is as defined in the formulae (I) and (Ia).
[8] A method for producing the compound described in any one of [1] to [7] includes mixing two or more raw materials containing one or more elements selected from Ba, Sr, and Li to obtain a mixture; and firing the mixture.
[9] A method for producing a hydride-ion conductor includes subjecting a powder of the compound described in any one of [1] to [7] to a high temperature under pressure to form a sintered body from the powder.
[10] A hydride-ion conductor includes at least one compound described in any one of [1] to [7].
[11] A hydride-ion conductor includes an oxyhydride having a layered structure of Ba, Li, H, and O, in which Ba is partially substituted with Sr.
[12] The hydride-ion conductor described in [11] exhibits, at a temperature of 25°C, an X-ray powder diffraction pattern corresponding to a layered perovskite-type structure belonging to an orthorhombic crystal system and having space group Pnm2₁.
[13] A battery, fuel cell, or electrolytic cell includes a hydride-ion-conductive layer containing at least one compound described in any one of [1] to [7].
[14] An electrochemical cell includes at least a pair of electrodes and a hydride-ion-conductive layer disposed therebetween, in which, when an electric current is passed through the pair of electrodes, a reduction reaction involving hydride ions proceeds at one of the electrodes.
[15] In the electrochemical cell described in [13], the reduction reaction is a reaction in which nitrogen (N₂) is reduced by hydride ions to produce ammonia (NH₃).
[16] An electrochemical cell includes at least a pair of electrodes and a hydride-ion-conductive layer disposed therebetween, the layer containing at least one compound according to any one of claims 1 to 7, in which, when an electric current is passed through the pair of electrodes, a reduction reaction involving hydride ions proceeds at one of the electrodes.
[17] In the electrochemical cell according to claim 16, the reduction reaction is a reaction in which nitrogen (N₂) is reduced by hydride ions to produce ammonia (NH₃).

### Advantageous Effects of Invention

According to the present invention, there are provided a novel compound exhibiting high hydride-ion conductivity, particularly favorable hydride-ion conductivity over an intermediate-temperature range, a method for producing the same, and applications such as batteries utilizing the same. The compound is also stable with respect to metal electrodes even in such a temperature range, and can expand the temperature range in which it can be applied as a solid electrolyte or the like.

### Brief Description of Drawings

FIG. 1 illustrates powder X-ray diffraction patterns of Ba_{1.75-x}SrₓLiH_{2.7}O_{0.9} (x = 0.03, 0.05, 0.07, 0.10) produced in the working examples.
FIG. 2 is a graph depicting the change in the phase transition temperature (a phase transition accompanied by a sharp increase in conductivity) with respect to the degree of Sr substitution in Ba_{1.75-x}SrₓLiH_{2.7}O_{0.9} (x = 0.03, 0.05, 0.07, 0.10) produced in the working examples. The value at x = 0 represents the phase transition temperature of Ba_{1.75}LiH_{2.7}O_{0.9} in a comparative example.
FIG. 3 is a Cole-Cole plot (at 330°C) obtained from AC impedance measurements of a laminate produced in the working examples (a laminate in which a conductive layer of Ba_{1.65}Sr_{0.10}LiH_{2.7}O_{0.9} is disposed between upper and lower metal layers (Mo, Pt, or Pd)).
FIG. 4 illustrates the measurement results of conductivity (S/cm) at temperatures of 200°C to 400°C for a laminate produced in the working examples (a laminate in which a conductive layer of Ba_{1.65}Sr_{0.10}LiH_{2.7}O_{0.9} is disposed between upper and lower Mo layers (blocking electrodes)). The conductivities of the other materials are cited from the literature.
FIG. 5 is a longitudinal sectional view schematically illustrating the structure of a cell used for ammonia synthesis in the working examples.
FIG. 6 illustrates the I-V characteristics during energization when ammonia was synthesized using the cell of the working examples.
FIG. 7 illustrates a GC spectrum during energization when ammonia was synthesized using the cell of the working examples.
FIG. 8 illustrates the concentrations of gases produced at the positive electrode upon application of an electric current when ammonia was synthesized using the cell of the working examples.
FIG. 9 illustrates a comparison with the theoretical NH₃ conversion efficiency when ammonia was synthesized using the cell of the working examples.
FIG. 10 illustrates the temporal change in the amount of ammonia produced at a current density of 1.27 mA/cm² when ammonia was synthesized using the cell of the working examples.
FIG. 11 illustrates gas chromatograms of gases collected during electrochemical ammonia synthesis under open-circuit conditions, in which (a) is a gas chromatogram at 0 hours, (b) is a gas chromatogram at 240 hours, and (c) is a gas chromatogram of gas collected when the flow on the anode side was switched from N₂ to Ar after ammonia synthesis.
FIG. 12 illustrates XRD patterns of the hydride-conductive layer after the reaction when ammonia synthesis was performed using the cell of the working examples, where (a) is before the ammonia synthesis experiment, (b) is after impedance measurement, and (c) is after the ammonia synthesis experiment.

### Description of Embodiments

The present invention will be described in detail below.

The present invention provides a compound represented by general formula (I) defined as:

Ba_{1.75-x}SrₓLiHₐO_{b} (I)

wherein, in the formula (I), x satisfies 0 < x ≤ 1.65, b satisfies 0 < b ≤ 1.5, and a is a number that satisfies charge compensation with respect to b.

In particular, the present invention provides a compound represented by general formula (Ia) defined as:

Ba_{1.75-x}SrₓLiH_{2.7-2y}O_{0.9+y} (Ia)

wherein, in the formula (Ia), x satisfies 0 < x ≤ 1.65 and -0.9 < y ≤ 0.6.

In the general formulae (I) and (Ia), x is preferably 0 < x ≤ 1.0, and more preferably 0.01 ≤ x ≤ 0.15.

In the general formula (Ia), y is preferably -0.89 ≤ y ≤ 0.6.

In one preferred example, the present invention provides a compound represented by general formula (II) defined as:

Ba_{1.75-x}SrₓLiH_{2.7}O_{0.9} (II)

wherein, in the formula (II), x is as defined in the formulae (I) and (Ia).

In one preferred example, the present invention provides a compound that exhibits, at a temperature of 25°C, an X-ray powder diffraction pattern corresponding to a layered perovskite-type structure belonging to an orthorhombic crystal system and having space group Pnm2₁.

One of the features of a compound of the present invention is that Ba is partially substituted with Sr. As a result, the phase transition temperature, which is the temperature at which the conductivity increases sharply, decreases. It is known that Ba_{1.75}LiH_{2.7}O_{0.9} undergoes a phase transition at 300°C and that the conductivity sharply increases accordingly (Non patent document 1), but as Ba is increasingly substituted with Sr, the phase transition temperature decreases.

In addition, a compound of the present invention in which Ba is partially substituted with Sr does not chemically react with metal electrodes such as Pt, Pd, and Mo even at 300°C or higher, and does not hinder hydride-ion conductivity even in such a temperature range.

A compound of the present invention can be produced, for example, by a method including mixing two or more raw materials containing one or more elements selected from Ba, Sr, and Li to obtain a mixture, and firing the mixture.

Specific examples of the step of obtaining the mixture include, for example, a step of mixing a raw material containing Ba, a raw material containing Sr, and a raw material containing Li to obtain the mixture. Examples thereof also include a step of using, as the raw material containing one or more elements selected from Ba, Sr, and Li, a raw material containing two or more elements selected from Ba, Sr, and Li, and mixing the raw material with the raw material containing one or more other elements selected from Ba, Sr, and Li to obtain the mixture. That is, there is no particular limitation as long as the mole ratio of the raw materials as a whole is such that each element has the intended stoichiometric ratio in consideration of the formula (I).

As the raw materials, hydrides, oxides, and the like of Ba, Sr, and Li can be used. Examples of the hydrides include BaH₂, SrH₂, and LiH. Examples of the oxides include BaO, SrO, and LiO₂. The raw materials are preferably in powder form. When a mixture is prepared by mixing two or more of such raw materials, the raw materials are mixed at a mole ratio such that each element has the intended stoichiometric ratio in consideration of the formula (I). The mixing may be performed using an agate mortar, a ball mill, or the like. The mixture may be used in powder form, or may be formed into pellets before use.

The firing of the mixture is preferably performed in a hydrogen atmosphere. The pressure conditions of the hydrogen atmosphere are not particularly limited, and the firing may be performed at normal pressure. For example, the firing can be performed in a hydrogen gas atmosphere at a pressure of 0.1 MPa to 2 GPa. The temperature of the firing is also not particularly limited, and can be set at a sufficiently high temperature for the firing. The firing temperature is not particularly limited, but can be, for example, 550°C to 700°C. Since the firing time also depends on the reaction conditions, it is not particularly limited, and the firing time can be, for example, 0.5 to 6 hours.

A hydride-ion conductor can be produced using a compound of the present invention by a method including subjecting a powder of the compound to a high temperature under pressure to form a sintered body from the powder.

For example, the powder of the compound is pressed and heated in a cavity of a heatable pressing device such as a hot press to form a sintered body from the powder. The pressing and heating are preferably performed in an inert gas atmosphere such as argon. The pressure is not particularly limited, but can be, for example, 100 to 300 MPa. The temperature is not particularly limited, but can be, for example, 350°C to 500°C. Since the time for the pressing and heating also depends on the reaction conditions, it is not particularly limited, and the pressing and heating can be performed, for example, for 0.5 to 1 hour.

The relative density of the sintered body of a compound of the present invention, which is a hydride-ion conductor, is not particularly limited. However, from the viewpoint of providing a dense sintered body, the relative density is preferably 90% or more at a temperature of 25°C, and more preferably 95% or more. The relative density can be further increased by sintering under pressure as described above. To date, pellets of Ba_{1.75}LiH_{2.7}O_{0.9} have been sintered in a hydrogen atmosphere at normal pressure, but densification can be achieved by performing sintering in an inert gas atmosphere such as argon under pressure as described above.

The relative density can be further increased by heat-treating the sintered body in a hydrogen atmosphere, that is, by annealing. The annealing can be performed, for example, in a hydrogen gas atmosphere at a pressure of 0.05 to 0.2 MPa. The annealing temperature is not particularly limited, but can be, for example, 550°C to 650°C. The annealing time is not particularly limited, but can be, for example, 3 to 6 hours.

A hydride-ion conductor of the present invention exhibits high hydride-ion conductivity. In particular, the hydride-ion conductor is in a superionic conductive state and exhibits favorable hydride-ion conductivity over an intermediate-temperature range (for example, 200°C to 400°C, 275°C to 400°C, or 300°C to 400°C).

A hydride-ion conductor of the present invention is preferably provided with electrodes. Examples of the electrodes include blocking electrodes that block mobile hydride ions, and permeable electrodes capable of converting hydrogen gas supplied from the outside into hydride ions and supplying the hydride ions to the hydride-ion conductor. Examples of materials for the blocking electrodes include, but are not particularly limited to, Mo and Ta. Examples of materials for the permeable electrodes include, but are not particularly limited to, Pd and TiN. The blocking electrodes and the permeable electrodes may each be a single layer or multiple layers, and a blocking electrode and a permeable electrode may be laminated together.

The electrodes are, for example, provided in a layered manner on surfaces of a layered hydride-ion conductor to constitute a laminate. For example, when the powder of a compound of the present invention is pressed and heated to form a sintered body, a laminate in which electrode layers are directly disposed above and below the sintered body can be obtained by disposing electrode layers above and below the powder layer and performing the pressing and heating.

In Ba_{1.75}LiH_{2.7}O_{0.9}, there is a problem in that it is chemically unstable with respect to electrodes, and it reacts with metal electrodes such as Pt and Pd, resulting in precipitation of impurities having low ionic conductivity. Since it also reacts with blocking electrodes such as Mo, the conductivity behavior at high temperatures has not been clarified. When Ba is partially substituted with Sr, the chemical stability with respect to electrodes is increased, and conductivity measurement can be performed without reacting with electrodes when the electrodes are of Pt, Pd or other such metals, and conductivity measurement can also be performed up to about 370°C even when blocking electrodes such as Mo are used. Because measurement can be performed up to high temperatures, the hydride-ion conductor of the present invention is found to exhibit a superionic conductive state and, particularly over an intermediate-temperature range (for example, 200°C to 400°C, 275°C to 400°C, or 300°C to 400°C), to be in a superionic conductive state and exhibit favorable hydride-ion conductivity, thereby making it possible to expand the temperature range in which it can be applied as a solid electrolyte or the like.

A hydride-ion conductor of the present invention is also specified as a hydride-ion conductor in which Ba is partially substituted with Sr in a conventional hydride-ion conductor including an oxyhydride having a layered structure of Ba, Li, H, and O. A typical X-ray powder diffraction pattern thereof exhibits, at a temperature of 25°C, a diffraction pattern of a layered perovskite-type structure belonging to an orthorhombic crystal system and having space group Pnm2₁.

A compound of the present invention exhibits high hydride-ion conductivity, and therefore can provide a hydride-ion conductor having high ionic conductivity in a solid. The compound can be used in a battery, a fuel cell, or an electrolytic cell having a hydride-ion-conductive layer containing the compound. For example, the compound can be suitably used for solid batteries such as hydride-ion secondary batteries and ammonia fuel cells, particularly all-solid-state batteries. Examples of the all-solid-state batteries include batteries including a positive electrode containing a hydride-ion supplier, a negative electrode containing a hydrogen storage metal or a hydrogen storage alloy, and the hydride-ion conductor disposed between the positive electrode and the negative electrode. Furthermore, it has the potential to give rise to novel energy devices using a hydride-ion conductor.

The present invention also relates to an electrochemical cell including at least a pair of electrodes and a hydride-ion-conductive layer disposed therebetween, in which, when an electric current is passed through the pair of electrodes, a reduction reaction involving hydride ions proceeds at one of the electrodes. Since hydride ions have high reducing power, the present invention utilizes the reducing power of the hydride ions. One example is an electrochemical cell in which a reduction reaction proceeds at one of the electrodes, in which nitrogen (N₂) is reduced by hydride ions and converted into ammonia (NH₃). In this example, it is preferable that at least nitrogen (N₂) be supplied to the electrode at which the reduction reaction proceeds. Hydrogen (H₂) may be supplied to the other electrode, but when the hydride-ion-conductive layer is a material that releases hydride ions upon energization, the reduction reaction can be caused to proceed by energization even without supplying hydrogen.

When the hydride-ion-conductive layer contains at least one compound of the present invention, such hydride-ion-conductive layer is preferable because, upon energization, it not only conducts hydride ions but also releases hydride ions. In addition, as described above, a conductive layer containing a compound of the present invention is also preferable in respect of that it is easy to produce, since a laminate in which electrode layers are directly disposed above and below the sintered body can be obtained by disposing electrode layers above and below a powder layer containing a powder of the compound of the present invention and performing pressing and heating.

There is no particular limitation on the configuration of the electrochemical cell of the present invention. Depending on the application, a catalyst layer may be disposed between each of the pair of electrodes and the hydride-ion-conductive layer, and a gas diffusion layer such as a metal foam may also be disposed.

### Examples

Specific embodiments of the present disclosure are illustrated in the following working examples, but the present invention is not limited thereto. All parts and percentages are by mass unless otherwise specified.

### 1. Production Example of Hydride-Ion-Conductive Compound

In a glove box, raw material powders (BaH₂, BaO, SrO, and LiH) were mixed at various mole ratios to obtain mixtures. The resulting mixtures were fired at 650°C for 6 hours in a hydrogen atmosphere.

As a result, powders of Ba_{1.75-x}SrₓLiH_{2.7}O_{0.9} (x = 0, 0.03, 0.05, 0.07, 0.10) were obtained.

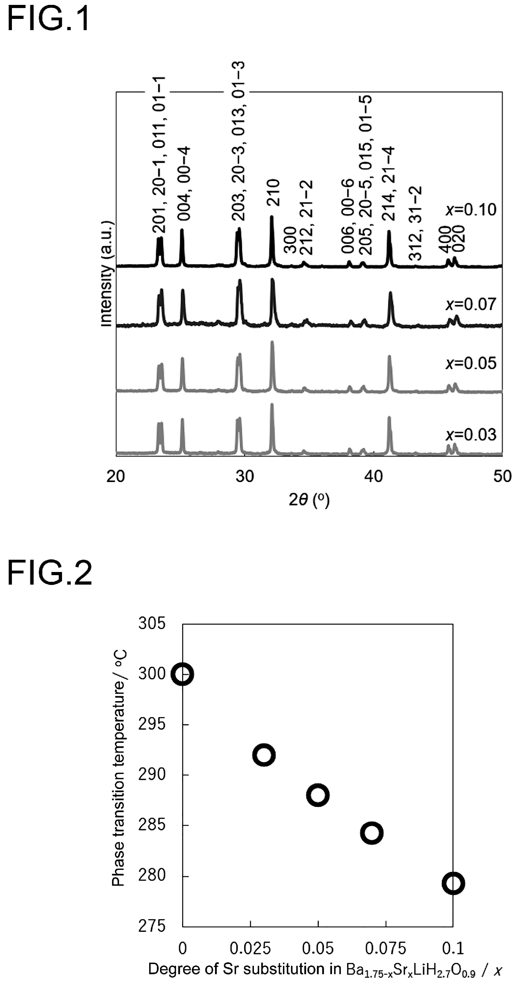

FIG. 1 illustrates powder X-ray diffraction patterns of these powders at room temperature (a temperature of 25°C). The results of FIG. 1 revealed that each of the powders had, at a temperature of 25°C, a layered perovskite-type structure belonging to an orthorhombic crystal system and having space group Pnm2₁.

### 2. Production Example of Sintered Body (Hydride-Ion Conductor)

Each of the resulting powders was pulverized, mixed, and sintered at 400°C for 1 hour at 300 MPa in an Ar atmosphere using a hot press to obtain a sintered body. When pressure was applied using the hot press, Mo layers were disposed above and below the powder layer. As a result, a laminate in which Mo layers functioning as blocking electrodes were directly disposed above and below the sintered body (hydride-ion conductor) was obtained.

The relative density of each of the obtained sintered bodies was about 93%. Furthermore, each of the resulting sintered bodies was treated at 650°C for 6 hours in a H₂ atmosphere to obtain a dense sintered body having a relative density (at a temperature of 25°C) of 98%. For the measurement of conductivity and the like described below, sintered bodies having an improved relative density of 98% were used.

When a sintered body was obtained under the same conditions at normal pressure without applying pressure, the relative density was about 88%. This revealed that the relative density was improved by sintering under pressure.

### 3. Relationship Between Sr Substitution and Hydride-Ion Conductivity

It is known that Ba_{1.75}LiH_{2.7}O_{0.9} undergoes a phase transition at 300°C, and that the conductivity sharply increases accordingly. FIG. 2 illustrates the results of measuring the temperature at which the conductivity sharply increases (= phase transition temperature) for each of the above compounds in which Ba in Ba_{1.75}LiH_{2.7}O_{0.9} is partially substituted with Sr. As illustrated in FIG. 2, it can be seen that the phase transition temperature decreased due to Sr substitution. It was revealed that, in Ba_{1.75-x}SrₓLiH_{2.7}O_{0.9}, the phase transition occurs at the lowest temperature (279°C) at x = 0.1, at which the solid solubility of Sr is maximized.

### 4. Relationship Between Sr Substitution and Chemical Stability with Electrodes

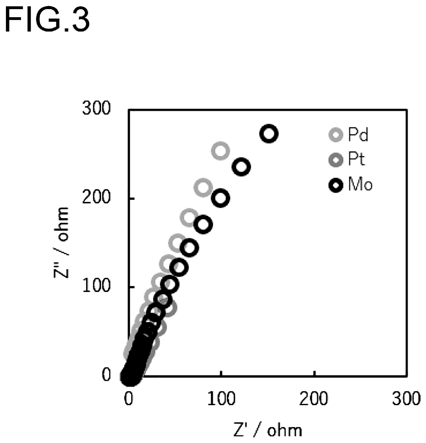

Ba_{1.75}LiH_{2.7}O_{0.9} reacts with metal electrodes (Pt, Pd) at 300°C or higher, resulting in precipitation of impurities having low ionic conductivity. In contrast, it was found that a compound of the present invention in which Ba is partially substituted with Sr does not chemically react with metal electrodes (Pt, Pd) even at 300°C or higher. FIG. 3 illustrates a Cole-Cole plot, at 330°C, obtained from AC impedance measurements of a laminate (a laminate in which a conductive layer of Ba_{1.65}Sr_{0.10}LiH_{2.7}O_{0.9} is disposed between upper and lower metal layers (Pd, Pt, or Mo)). The results of FIG. 3, in which Ba_{1.65}Sr_{0.10}LiH_{2.7}O_{0.9} was used as the hydride-ion conductor, indicate that no chemical reaction proceeded at 330°C with either the metal electrodes (Pt, Pd) or the blocking electrode (Mo).

### 5. Measurement of Conductivity

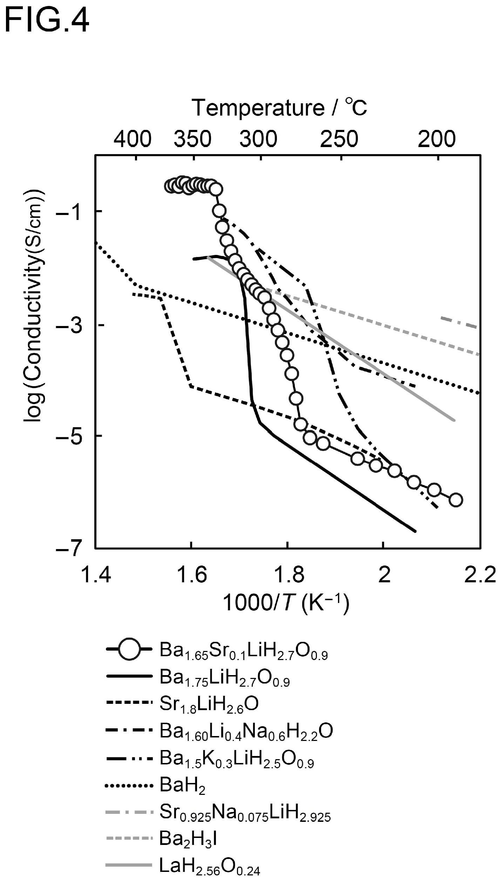

Conductivity (S/cm) at temperatures of 200°C to 400°C was measured using the laminate produced in Section 2. Ba_{1.65}Sr_{0.10}LiH_{2.7}O_{0.9} was used as the conductor. FIG. 4 illustrates the results together with data of known hydride-ion conductors (cited from the literature). From FIG. 4, it can be understood that Ba_{1.65}Sr_{0.10}LiH_{2.7}O_{0.9} is a material that is in a superionic conductive state and exhibits the highest hydride conductivity at 330°C to 370°C.

### 6. Production of Laminate for Electrochemical Cell

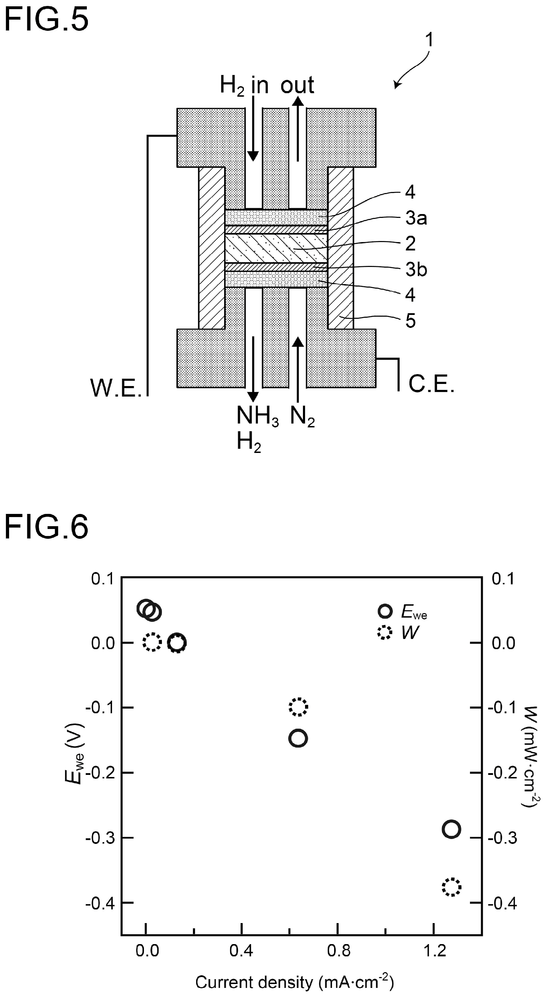

In the same manner as described above, a laminate in which a Ba_{1.65}Sr_{0.10}LiH_{2.7}O_{0.9} layer (hydride-ion-conductive layer) was disposed between a pair of electrodes (FIG. 5) was obtained. However, a Pt-C layer 3a (a layer of platinum powder supported on commercially available carbon) was disposed between one of the electrodes and the hydride-ion-conductive layer 2, and a Ru-Pt-C layer 3b (a layer of ruthenium-platinum mixed powder supported on commercially available carbon) was disposed between the other electrode and the hydride-ion-conductive layer 2. A gas diffusion layer 4 (Cu foam, SUS foam, or a combination thereof) was also disposed between the Pt-C layer and the corresponding electrode and between the Ru-Pt-C layer and the corresponding electrode. A gas tube capable of introducing or discharging gas was attached to each of the pair of electrodes. In FIG. 5, the upper and lower members through which the gas tubes pass and to which wiring lines are connected are stainless-steel (SUS) current collectors, and the entirety of the current collectors, the metal foam 4, and the Pt-supported carbon electrodes 3a and 3b functions as the electrodes.

### 7. Synthesis 1 of Ammonia by Electrochemical Cell

The following experiment was carried out using the electrochemical cell 1 having the configuration illustrated in FIG. 5. The produced electrochemical cell was allowed to stand in a hydrogen atmosphere at a temperature of 350°C. At this time, the voltage between the electrodes was 9 mV. Thereafter, nitrogen gas and hydrogen gas were supplied. The current for energization was increased stepwise up to 1000 µA. As the current was increased, the gas discharged from the gas tube on the anode side was analyzed by gas chromatography.

As the drawn current increased, the voltage decreased, indicating power generation. The maximum power density was 1.8 µW/cm² (at 7.6 × 10⁻⁵ A/cm²).

GC analysis of the gas collected from the anode side detected an ammonia peak. As the ammonia production rate calculated from the detected GC peak increased, the nitrogen production rate decreased, and after the ammonia production rate reached a peak and then decreased, the nitrogen production rate increased. From this, it is understood that a reduction reaction from nitrogen to ammonia proceeds on the anode.

### 8. Synthesis 2 of Ammonia by Electrochemical Cell

The following experiment was further carried out using the electrochemical cell 1 having the configuration illustrated in FIG. 5. The produced electrochemical cell was allowed to stand in a hydrogen atmosphere at a temperature of 350°C, and nitrogen gas and hydrogen gas were both supplied at 10 mml/min. As the current was increased, the gas discharged from the gas tube of the anode was analyzed by gas chromatography.

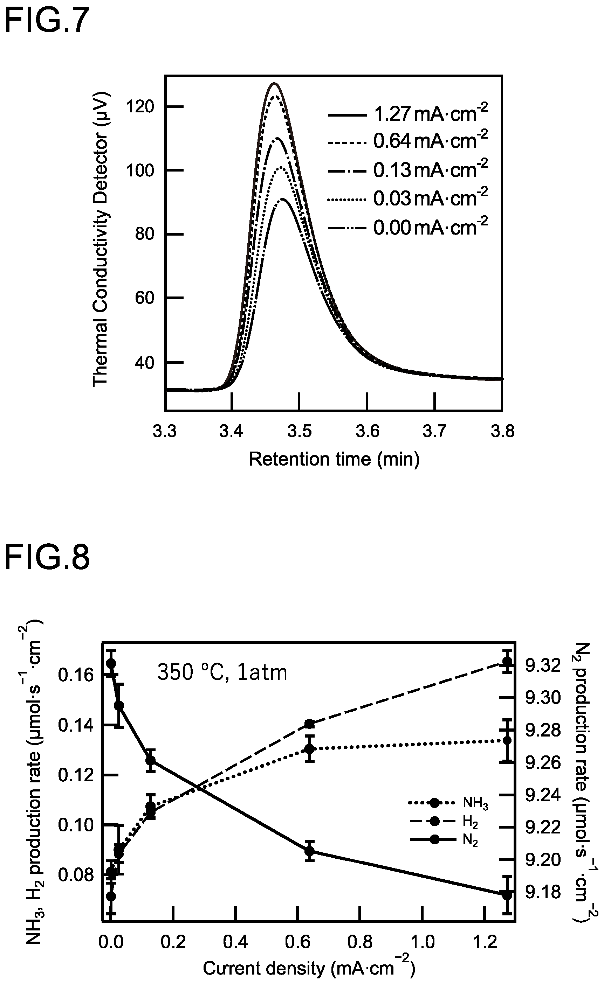

FIG. 6 illustrates the I-V characteristics during energization. E_{we} indicates the voltage of the working electrode, and W indicates the power density. A voltage drop upon application of an electric current was observed. FIG. 7 illustrates GC spectra during energization. An increase in the amount of NH₃ produced was observed as the current density increased. From these results, it was found that NH₃ was produced by an electrochemical reaction at the anode.

FIG. 8 illustrates the concentrations of gases produced at the anode upon application of an electric current. As the current density increased, N₂ decreased and NH₃ increased. This indicates that 1/2N₂ + 3H⁻ → NH₃ + 3e⁻ occurred as an electrochemical reaction. At high current density, hydrogen production (2H⁻ → H₂ + 2e⁻) mainly occurred.

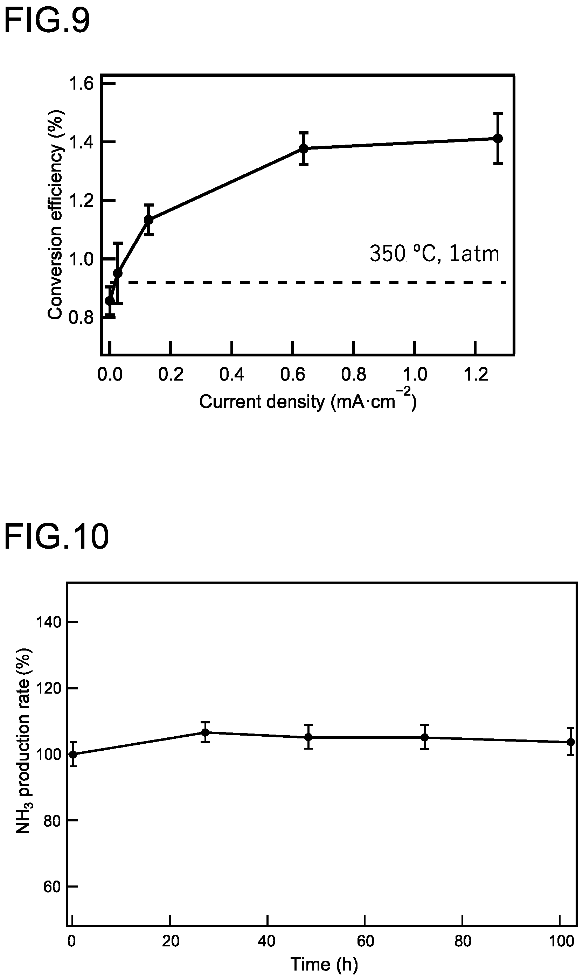

FIG. 9 illustrates a comparison with the theoretical NH₃ conversion efficiency. Upon application of current, the theoretical conversion efficiency at 350°C and 1 atm (0.92%) was exceeded. This indicates the superiority of the electrochemical reaction that supplies H⁻ to the reaction field. The conversion efficiency was determined from the following equation. r_{NH3} indicates the amount of NH₃ produced, and r_{N2} and r_{H2} indicate the amounts of N₂ and H₂ supplied.$Conversion efficiency = {rNH}_{3} / \left({rN}_{2}+{rH}_{2}+{rNH}_{3}\right)$

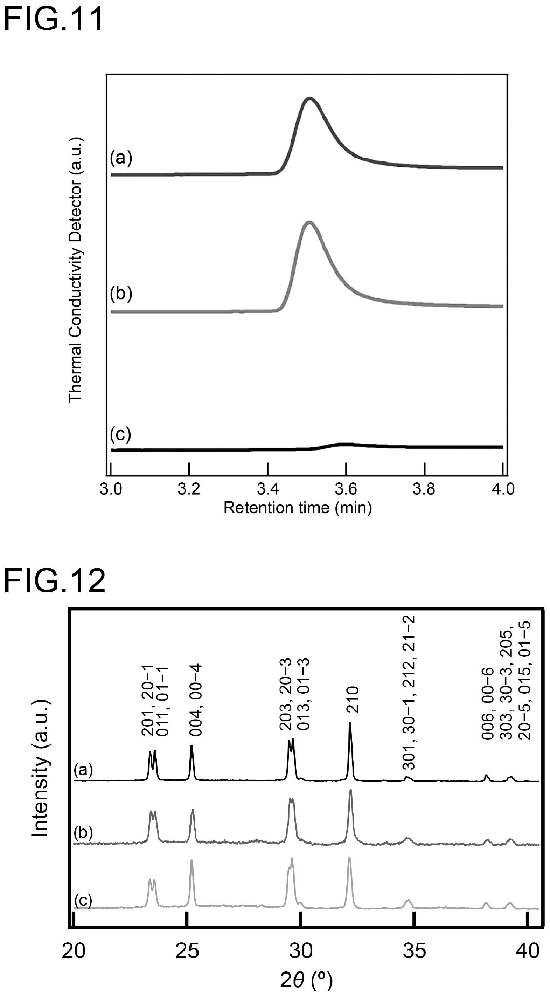

FIG. 10 illustrates the temporal change in the amount of ammonia produced at a current density of 1.27 mA/cm². FIG. 11 illustrates gas chromatograms of gases collected during electrochemical ammonia synthesis under open-circuit conditions, in which (a) is a gas chromatogram at 0 hours, (b) is a gas chromatogram at 240 hours, and (c) is a gas chromatogram of gas collected when the flow on the anode side was switched from N₂ to Ar after ammonia synthesis. The amount of NH₃ produced was maintained for 10 days, and the hydride-ion-conductive layer was stable during operation of the device.

FIG. 12 illustrates XRD patterns of the hydride-ion-conductive layer after the reaction, in which (a) is before the ammonia synthesis experiment, (b) is after impedance measurement, and (c) is after the ammonia synthesis experiment. There was no significant change in the XRD pattern of the hydride-ion-conductive layer even after the reaction in the device, and the hydride-ion-conductive layer was stable during operation of the device.

### Reference Signs List

- 1: Electrochemical cell
- 2: Ba_{1.65}Sr_{0.10}LiH_{2.7}O_{0.9} layer (hydride-ion-conductive layer)
- 3a: Pt-C layer
- 3b: Ru-Pt-C layer
- 4: Metal foam (gas diffusion layer)
- 5: Al₂O₃ tube

## Claims

1. A compound represented by general formula (I) defined as:
Ba_{1.75-x}SrₓLiHₐO_{b} (I)
wherein x satisfies 0 < x ≤ 1.65, b satisfies 0 < b ≤ 1.5, and a is a number that satisfies charge compensation with respect to b.

2. A compound represented by general formula (Ia) defined as:
Ba_{1.75-x}SrₓLiH_{2.7-2y}O_{0.9+y} (Ia)
wherein x satisfies 0 < x ≤ 1.65 and -0.9 < y ≤ 0.6.

3. The compound according to claim 1 or 2, wherein the compound exhibits, at a temperature of 25°C, an X-ray powder diffraction pattern corresponding to a layered perovskite-type structure belonging to an orthorhombic crystal system and having space group Pnm2₁.

4. The compound according to any one of claims 1 to 3, wherein 0 < x ≤ 1.0.

5. The compound according to any one of claims 1 to 4, wherein 0.01 ≤ x ≤ 0.15.

6. The compound according to any one of claims 1 to 5, wherein -0.89 ≤ y ≤ 0.6.

7. The compound according to any one of claims 1 to 6, wherein the compound is represented by general formula (II) defined as:
Ba_{1.75-x}SrₓLiH_{2.7}O_{0.9} (II)
wherein x is as defined in the formulae (I) and (Ia).

8. A method for producing the compound according to any one of claims 1 to 7, comprising mixing two or more raw materials containing one or more elements selected from Ba, Sr, and Li to obtain a mixture; and firing the mixture.

9. A method for producing a hydride-ion conductor, comprising subjecting a powder of the compound according to any one of claims 1 to 7 to a high temperature under pressure to form a sintered body from the powder.

10. A hydride-ion conductor comprising at least one compound according to any one of claims 1 to 7.

11. A hydride-ion conductor comprising an oxyhydride having a layered structure of Ba, Li, H, and O, wherein Ba is partially substituted with Sr.

12. The hydride-ion conductor according to claim 11, wherein the hydride-ion conductor exhibits, at a temperature of 25°C, an X-ray powder diffraction pattern corresponding to a layered perovskite-type structure belonging to an orthorhombic crystal system and having space group Pnm2₁.

13. A battery, fuel cell, or electrolytic cell comprising a hydride-ion-conductive layer containing at least one compound according to any one of claims 1 to 7.

14. An electrochemical cell comprising at least a pair of electrodes and a hydride-ion-conductive layer disposed therebetween, wherein, when an electric current is passed through the pair of electrodes, a reduction reaction involving hydride ions proceeds at one of the electrodes.

15. The electrochemical cell according to claim 14, wherein the reduction reaction is a reaction in which nitrogen (N₂) is reduced by hydride ions to produce ammonia (NH₃).

16. An electrochemical cell comprising at least a pair of electrodes and a hydride-ion-conductive layer disposed therebetween, the layer containing at least one compound according to any one of claims 1 to 7, wherein, when an electric current is passed through the pair of electrodes, a reduction reaction involving hydride ions proceeds at one of the electrodes.

17. The electrochemical cell according to claim 16, wherein the reduction reaction is a reaction in which nitrogen (N₂) is reduced by hydride ions to produce ammonia (NH₃).
